# FASCICULE DE BREVET EUROPEEN

(11) **EP 2 304 191 B1**
(45) Date de publication et mention de la délivrance du brevet: **02.07.2014**
(21) Numéro de dépôt: 09753872.2
(22) Date de dépôt: 26.05.2009
(51) Int. Cl.: F01D 7/00, F04D 29/32, F04D 29/36

(54) **SYSTÈME SIMPLIFIÉ DE COMMANDE DE CALAGE D'UNE PALE D'HÉLICE D'UN TURBOMOTEUR POUR AÉRONEF**
VEREINFACHTES STEUERSYSTEM FÜR DIE BLATTVERSTELLUNG EINER FLUGZEUGTRIEBWERKSLUFTSCHRAUBE
SIMPLIFIED SYSTEM FOR CONTROLLING THE SETTING OF A PROPELLER BLADE FOR AN AIRCRAFT TURBOSHAFT ENGINE

(30) Priorité: 29.05.2008 FR 0853501
(43) Date de publication de la demande: 06.04.2011
(73) Titulaire: Snecma, 75015 Paris (FR)
(72) Inventeur: GALLET, François, F-75012 Paris (FR)
(74) Mandataire: Ilgart, Jean-Christophe
(86) Numéro de dépôt international: PCT/EP2009/056361
(87) Numéro de publication internationale: WO 2009/144217

(56) Documents cités:
- GB-A- 2 194 991
- US-A- 5 779 446

## Description

### DOMAINE TECHNIQUE

La présente invention se rapporte de façon générale à un système de commande de calage d'une pale d'hélice d'un turbomoteur pour aéronef, par exemple du type connu du document GB 2 194 991.

L'invention se rapporte également à une hélice équipée d'un tel système de commande, ainsi qu'à un procédé de pilotage de ce système.

L'invention s'applique à tout type d'hélice, hélice simple ou système d'hélices contrarotatives, de préférence pour turboréacteur ou turbopropulseur.

### ETAT DE LA TECHNIQUE ANTERIEURE

Un turbopropulseur peut être équipé d'un système de commande de calage associé à chacune des pales de son hélice, afin d'adapter l'orientation de ces pales à la vitesse de l'aéronef.

Un tel système est conçu de manière à ce que la pale reste fixe en incidence lorsque le système de commande n'est pas actionné, et doit donc permettre de résister à l'action du couple généré par les forces aérodynamique et centrifuge s'exerçant sur cette pale durant la rotation de l'hélice. Plus généralement, pour conserver son calage, on considère que la pale doit être bloquée dans les deux sens de rotation selon son propre axe. Pour ce faire, le système est généralement équipé d'un mécanisme de blocage, habituellement du type assurant un contact/frottement entre deux pièces, tel qu'un frein à disque. Pour commander la pale en incidence, il est donc nécessaire d'effectuer une étape préliminaire de déblocage de la pale en incidence, par rupture du contact entre les deux pièces du mécanisme de blocage.

Bien entendu, la présence du mécanisme de blocage complexifie fortement la conception du système de commande, ce qui engendre des inconvénients en termes de masse, de fiabilité et d'encombrement.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet un système de commande de calage d'une pale d'hélice d'un turbomoteur pour aéronef, comprenant :
- une pièce annulaire de logement de pied de ladite pale, dont la rotation est destinée à assurer le calage en incidence de cette pale, ladite pièce annulaire définissant une première piste présentant au moins une première et une seconde encoches espacées circonférentiellement l'une de l'autre et chacune délimitée par une première surface de butée dans un premier sens de la direction circonférentielle et par une seconde surface de butée dans un second sens de la direction circonférentielle, opposé audit premier sens ;
- une seconde piste sensiblement annulaire, concentrique à ladite première piste et disposée en regard et extérieurement par rapport à celle-ci, ladite seconde surface de butée de la première encoche et ladite première surface de butée de la seconde encoche étant également chacune orientée vers ladite seconde piste ;

- un élément d'actionnement de la pièce annulaire agencé entre les première et seconde pistes, ledit élément d'actionnement présentant une première surface de butée dans le premier sens de la direction circonférentielle ainsi qu'une seconde surface de butée dans le second sens de la direction circonférentielle ;
- un premier élément de blocage prévu entre les première et seconde pistes, logé dans ladite première encoche et en regard de ladite seconde surface de butée de l'élément d'actionnement ; et
- un second élément de blocage prévu entre les première et seconde pistes, logé dans ladite seconde encoche et en regard de ladite première surface de butée de l'élément d'actionnement ;
lesdits premier et second éléments de blocage étant aptes à occuper, durant le fonctionnement du turbomoteur :
- une position normale d'arc-boutement, dans laquelle ledit premier élément de blocage est d'une part en contact avec la seconde surface de butée de la première encoche, à distance de ladite première surface de butée de cette encoche et de la seconde surface de butée de l'élément d'actionnement, et d'autre part en contact avec la seconde piste, position dans laquelle un premier ressort placé entre ladite première surface de butée de l'encoche et ledit premier élément de blocage provoque un premier effort de contact de ladite seconde surface de butée de l'encoche sur le premier élément de blocage, et générant un premier effort de réaction de ladite seconde piste sur ledit premier élément de blocage, le premier effort de contact et le premier effort de réaction assurant un premier arc-boutement des première et seconde pistes, rendant celles-ci solidaires en rotation dans ledit premier sens,
   et dans laquelle ledit second élément de blocage est d'une part en contact avec la première surface de butée de la seconde encoche, à distance de ladite seconde surface de butée de cette encoche et de la première surface de butée de l'élément d'actionnement, et d'autre part en contact avec la seconde piste, position dans laquelle un second ressort placé entre ladite seconde surface de butée de l'encoche et ledit second élément de blocage provoque un second effort de contact de ladite première surface de butée de l'encoche sur l'élément de blocage, et générant un second effort de réaction de ladite seconde piste sur ledit second élément de blocage, le second effort de contact et le second effort de réaction assurant un second arc-boutement des première et seconde pistes, rendant celles-ci solidaires en rotation dans ledit second sens ; et
- une position de déblocage dans ledit premier sens, dans laquelle le premier élément de blocage est au contact de la seconde surface de butée de l'élément d'actionnement, cette position de déblocage étant assurée par l'application d'un premier couple d'actionnement dans ledit premier sens sur ledit élément d'actionnement, de valeur permettant d'exercer, sur le premier élément de blocage avec ladite seconde surface de butée de l'élément d'actionnement, un premier effort de déblocage s'opposant à la force du premier ressort, et suffisant pour rendre nul ledit premier effort d'appui, et rompre ainsi ledit premier arc-boutement, ladite position de déblocage dans ledit premier sens autorisant le déplacement en rotation, par rapport à la seconde piste, dans ledit premier sens du couple d'actionnement, de l'ensemble comportant ladite première piste, lesdits premier et second éléments de blocage et ledit élément d'actionnement ; et
- une position de déblocage dans ledit second sens, dans laquelle le second élément de blocage est au contact de la première surface de butée de l'élément d'actionnement, cette position de déblocage étant assurée par l'application d'un second couple d'actionnement dans ledit second sens sur ledit élément d'actionnement, de valeur permettant d'exercer, sur le second élément de blocage avec ladite première surface de butée de l'élément d'actionnement, un second effort de déblocage s'opposant à la force du second ressort, et suffisant pour rendre nul ledit second effort d'appui, et rompre ainsi ledit second arc-boutement, ladite position de déblocage dans ledit second sens autorisant le déplacement en rotation, par rapport à la seconde piste, dans ledit second sens du couple d'actionnement, de l'ensemble comportant ladite première piste, lesdits premier et second éléments de blocage et ledit élément d'actionnement.

L'invention est remarquable en ce qu'elle permet un blocage automatique de la pale lorsqu'aucun couple d'actionnement n'est fourni à l'élément d'actionnement, et ce du fait de l'arc-boutement créé entre les première et seconde pistes, par les premiers et seconds éléments de blocage occupant leur position normale d'arc-boutement.

En revanche, lorsqu'une modification du calage de la pale est requise, il est procédé à l'application d'un couple de valeur et de sens appropriés sur l'élément d'actionnement, ce couple permettant à la fois de débloquer le système en plaçant les éléments de blocage dans l'une des deux positions de déblocage, et d'entraîner la rotation de la première piste dans le sens voulu, assurant le calage en incidence de la pale. Il est noté que le déblocage et la rotation de la première piste sont provoqués de manière simultanée ou quasi-simultanée.

Ainsi, le système de commande de calage selon l'invention est de conception simplifiée par rapport à celles rencontrées dans l'art antérieur, puisqu'une même et unique commande permet d'assurer le déblocage et le déplacement de la pale en incidence. Aucun mécanisme séparé de blocage n'est donc requis, comme cela était le cas antérieurement, ce qui engendre des avantages en termes de masse, de fiabilité et d'encombrement.

Enfin, le système selon l'invention procure également une précision élevée dans le calage de la pale associée à ce système.

De préférence, lesdites première et seconde surfaces de butée de l'élément d'actionnement sont également chacune orientées vers ladite première piste. De ce fait, la rotation de la première piste assurant le calage de la pale est plus aisée, puisque l'effort de réaction de la seconde piste sur l'élément de blocage en contact avec l'élément d'actionnement est fortement réduit, voire nul. La résistance au déplacement en rotation de la première piste s'en trouve en effet diminuée.

De préférence, le système comprend des moyens élastiques de rappel couplés audit élément d'actionnement, et permettant, lorsque ce dernier n'est pas soumis audit premier couple d'actionnement ou audit second couple d'actionnement, de déplacer en rotation cet élément d'actionnement relativement à ladite première piste, de manière à ramener automatiquement lesdits premier et second éléments de blocage en position normale d'arc-boutement.

Préférentiellement, le système comprend un moteur d'actionnement commandant en rotation ledit élément d'actionnement. C'est donc ce moteur qui est destiné à délivrer le couple d'actionnement provoquant le déplacement des éléments de blocage dans leur position de déblocage, ainsi que la rotation de la première piste par rapport à la seconde piste.

De préférence, lesdits premier et second éléments de blocage sont des rouleaux. Une alternative consiste à prévoir que lesdits premier et second éléments de blocage sont des billes. Dans chacun de ces cas, il est donc prévu des éléments roulants, ce qui limite avantageusement les frottements par rapport à ceux rencontrés sur les mécanismes de blocage du type freins à disques de l'art antérieur.

De préférence, lesdits premier et second éléments de blocage forment un doublet d'éléments de blocage, et le système est équipé d'une pluralité de doublets d'éléments de blocage espacés circonférentiellement les uns des autres. Cela permet de répartir de façon plus homogène, dans la direction circonférentielle, les efforts assurant l'arc-boutement des première et seconde pistes. De plus, dans la position normale d'arc-boutement, chaque élément de blocage doit donc supporter des efforts de compression d'intensité plus faible par rapport à ceux rencontrés dans la solution à doublet unique, ce qui permet notamment d'améliorer la fiabilité du système.

L'invention a également pour objet une hélice pour turbomoteur d'aéronef comprenant un système de commande de calage tel que décrit ci-dessus, associé à chacune de ses pales.

L'invention a également pour objet une turbomachine pour aéronef, comprenant au moins une hélice telle que décrite ci-dessus.

La turbomachine comprend de préférence un système d'hélices contrarotatives, avec chacune de ses deux hélices conçue de la manière exposée précédemment, cette turbomachine étant de préférence un turbopropulseur, mais pouvant alternativement être un turboréacteur. Naturellement, dans ce dernier cas, le système d'hélices est destiné à constituer la soufflante du turboréacteur.

Enfin, l'invention a aussi pour objet un procédé de pilotage d'un système de commande de calage d'une pale d'hélice d'un turbomoteur, tel que décrit ci-dessus. Selon ce procédé, lorsqu'une modification de calage en incidence est requise, il est appliqué un couple d'actionnement approprié audit élément d'actionnement.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique en demi-coupe longitudinale d'une partie d'hélice pour turbomoteur d'aéronef, selon un mode de réalisation préféré de la présente invention ;
- la figure 2 représente une vue en perspective d'un anneau de rétention des pales de l'hélice de la figure 1 ;
- la figure 3 représente, de façon détaillée, un système de commande de calage d'une pale de l'hélice de la figure 1, en demi-coupe transversale, et correspondant également à une vue en demi-coupe prise selon la ligne III-III de la figure 4 ;
- la figure 4 représente, de façon détaillée, le système de commande de calage en coupe prise selon la ligne IV-IV de la figure 3, avec les éléments de blocage du système occupant leur position normale d'arc-boutement ;
- la figure 5a représente une vue similaire à celle de la figure 4, avec les éléments de blocage du système occupant leur position de déblocage dans le premier sens, adoptée lors d'un calage de la pale visant à réduire l'incidence de celle-ci ;
- la figure 5b représente une vue similaire à celle de la figure 5a, avec les éléments de blocage du module occupant leur position de déblocage dans le second sens, adoptée lors d'un calage de la pale visant à augmenter l'incidence de celle-ci ; et
- la figure 6 représente, en perspective, une partie d'un système de calage selon un autre mode de réalisation préféré de la présente invention.

### EXPOSÉ DÉTAILLÉ DE MODES DE RÉALISATION PRÉFÉRÉS

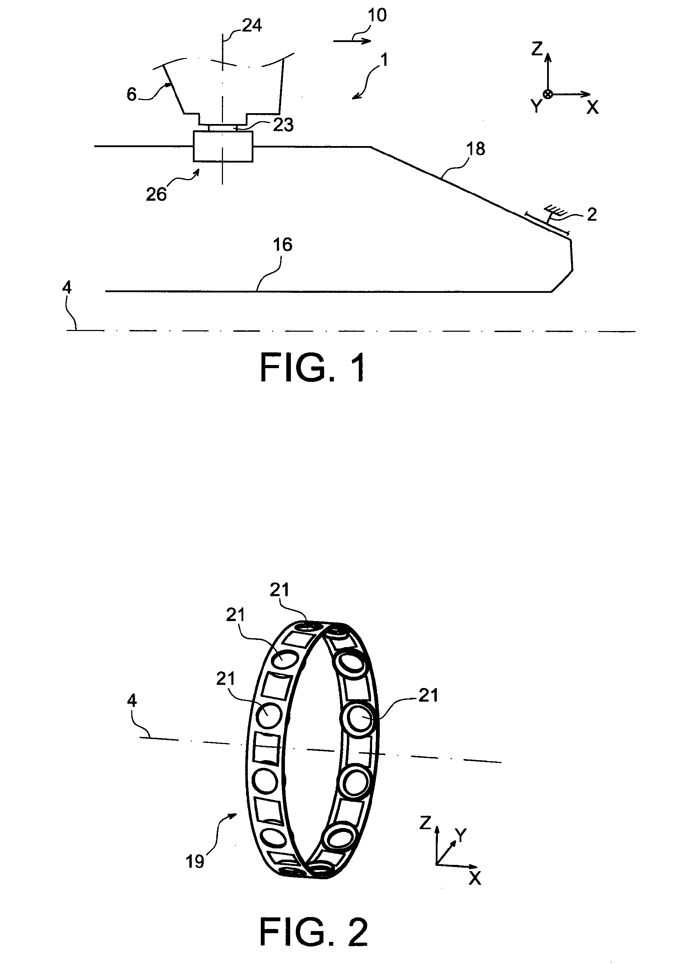

En référence à la figure 1, on peut apercevoir une partie d'une hélice 1 d'un turbopropulseur selon un mode de réalisation préféré de la présente invention, par exemple appartenant à un système d'hélices contrarotatives.

L'axe X correspond à la direction longitudinale de l'hélice 1, direction qui correspond également à la direction longitudinale du turbopropulseur destiné à intégrer une telle hélice 1. L'axe Y correspond quant à lui à la direction transversale de l'hélice 1, et l'axe Z à la direction verticale ou de la hauteur, ces trois axes étant orthogonaux entre eux.

L'hélice 1 comprend un stator ou carter 2, centré sur un axe longitudinal 4, parallèle à l'axe X. Ce stator 2 est de façon connue destiné à être solidaire des autres carters de la turbomachine.

De plus, une direction principale d'écoulement de l'air à travers l'hélice 1 est représentée schématiquement par la flèche 10 parallèle à l'axe X, cette direction principale d'écoulement servant également de référence pour les termes « amont » et « aval » employés ci-dessous.

A titre indicatif, dans le cas d'un système d'hélices contrarotatives, les deux hélices (une seule étant représentée) sont destinées à tourner dans des sens opposés autour de l'axe 4 sur lequel elles sont centrées, les rotations s'effectuant par rapport au stator 2 restant immobile.

L'hélice 1 comprend un arbre d'entraînement 16 centré sur l'axe 4, et destiné à être entraîné en rotation par un dispositif de transmission mécanique (non représenté), par exemple formant réducteur à train épicycloïdal, lui-même entraîné par la turbine de la turbomachine. Dans le cas d'un doublet d'hélices contrarotatives, il est aussi envisageable que celles-ci soient entrainées directement par une turbine contrarotative.

L'arbre creux 16 porte fixement à son extrémité aval un rotor 18 logeant au niveau de son extrémité radiale extérieure, à savoir au niveau de sa couronne circonférentielle, des pales d'hélices 6. Plus précisément, comme cela est montré sur la figure 2, le rotor 18 est équipé d'un anneau de rétention des pales 19, centré sur l'axe 4, et présentant une pluralité de logements 21 espacés circonférentiellement, chacun destiné à recevoir un pied de pale, et faisant partie intégrante d'un système de commande de calage de ladite pale.

Le système de commande de calage 26, schématisé sur la figure 1, permet de déplacer la pale 6 à laquelle il est associé entre une position d'incidence minimale et une position d'incidence maximale, par rapport à l'axe 4. Le déplacement de la pale 6 entre ces deux positions s'effectue par pivotement de celle-ci sur elle-même, c'est-à-dire autour de son axe principal 24, qui correspond également à l'axe du logement de l'anneau de rétention dans lequel est inséré le pied de pale 23. Bien entendu, chacune des pales 6 de l'hélice est équipée de son propre système de commande de calage 26, ces dernier étant pilotés de préférence simultanément afin que chaque pale présente, à tout moment, la même incidence.

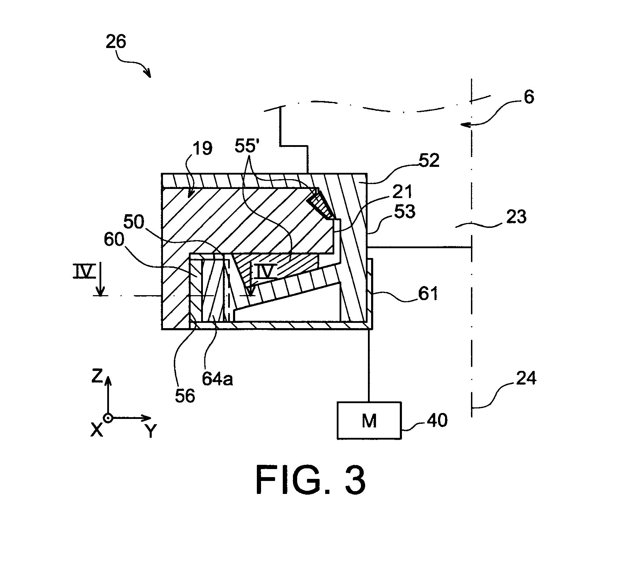

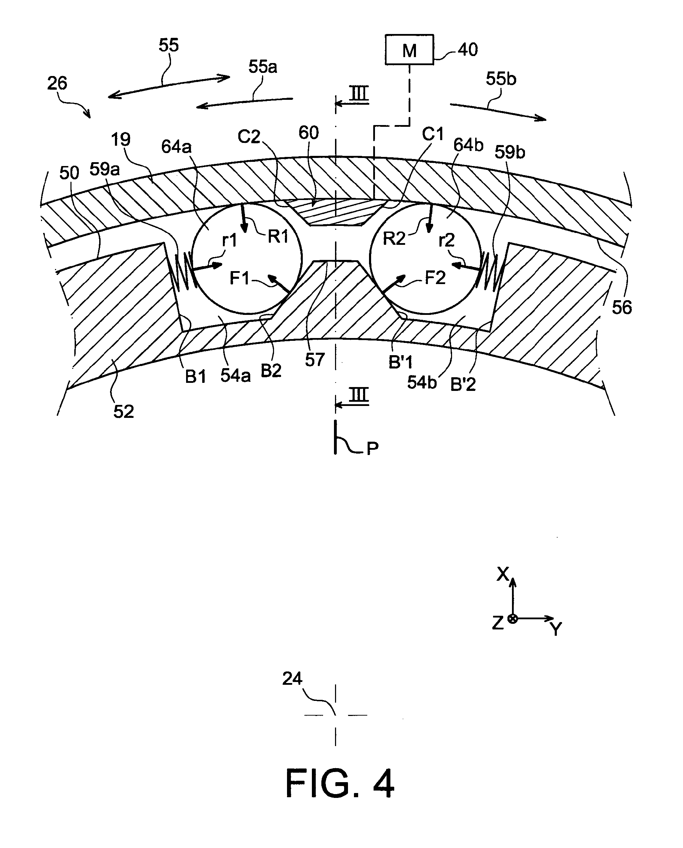

Un système de commande de calage 26, selon un mode de réalisation préféré de la présente invention, va maintenant être décrit en référence aux figures 3 et 4.

Il comprend tout d'abord une pièce annulaire 52 de logement de pied de la pale, centrée sur l'axe 24, et présentant une partie centrale insérée de manière librement rotative dans le logement 21 de l'anneau de rétention 19. D'ailleurs, des roulements 55', tels que des roulements à rouleaux tronconiques, sont prévus entre les deux pièces, afin de faciliter la rotation relative entre celles-ci, selon l'axe 24.

Par exemple, la partie centrale de la pièce 52, également dénommée pivot, présente elle-même un alésage intérieur 53 dans lequel est logé le pied de pale 23, en étant solidaire de celui-ci en rotation selon l'axe 24. Ainsi, la rotation de la pièce 52 est destinée à assurer la rotation de la pale 6 selon son axe 24, et donc destinée à assurer le calage en incidence de cette pale.

Cette pièce 52, qui constitue de préférence la pièce interne du système de commande centré sur l'axe 24, définit une première piste 50 orientée radialement vers l'extérieur, et sensiblement annulaire. Elle présente une première et une seconde encoches 54a, 54b ouvertes radialement vers l'extérieur et espacées l'une de l'autre selon une direction circonférentielle 55.

La première encoche 54a est délimitée par une première surface de butée B1 dans un premier sens 55a de la direction circonférentielle 55, et par une seconde surface de butée B2 dans un second sens 55b de cette direction, opposé au premier sens. En coupe orthogonale à l'axe 24 telle que celle montrée sur la figure 4, la surface B1, de préférence plane, est de préférence orthogonale à la direction locale circonférentielle, à savoir la direction tangentielle. En revanche, la surface B2, également préférentiellement plane, est aussi orientée radialement vers l'extérieur, son angle avec la direction locale circonférentielle étant de préférence compris entre 5 et 85°, la valeur retenue étant en particulier choisie en fonction des coefficients de frottement des matériaux en présence, pour pouvoir générer un arc-boutement qui sera décrit ci-après.

Les deux surfaces B1, B2 sont espacées circonférentiellement l'une de l'autre par un fond d'encoche.

La seconde encoche 54b est délimitée par une première surface de butée B'1 dans le premier sens 55a de la direction 55, et par une seconde surface de butée B'2 dans le second sens 55b. En coupe orthogonale à l'axe 24 telle que celle montrée sur la figure 4, la surface B'2, de préférence plane, est de préférence orthogonale à la direction locale circonférentielle. En revanche, la surface B'1, également de préférence plane, est aussi orientée radialement vers l'extérieur, son angle avec la direction locale circonférentielle étant de préférence compris entre 5 et 85°, la valeur retenue étant ici aussi choisie en fonction des coefficients de frottement des matériaux en présence, pour pouvoir générer un arc-boutement. Les deux surfaces B'1, B'2 sont espacées circonférentiellement l'une de l'autre par un fond d'encoche.

Les surfaces B2 et B'1 sont situées dos à dos sur une même saillie radiale extérieure 57 de la pièce annulaire 52, traversée par un plan de symétrie radial P passant par l'axe 24. Les encoches 54a, 54b ainsi que leurs surfaces B1, B2, B'1, B'2 sont effectivement agencées de part et d'autre du plan P, de manière symétrique par rapport à celui-ci, comme cela est visible sur la figure 4. Par conséquent, dans le second sens 55b, on trouve successivement la surface B1, le fond de l'encoche 54a, la surface B2, la surface B'1, le fond de l'encoche 54b, puis la surface B'2.

Le système 26 comporte également une seconde piste 56 sensiblement annulaire, également d'axe 24 et agencée en regard et extérieurement par rapport à la première piste 50, en créant un espace annulaire entre celles-ci. Cette piste 56, orientée radialement vers l'intérieur, est prévue sur l'anneau de rétention 19, à distance et concentriquement au logement de pied de pale 21.

Ainsi, les deux surfaces B2 et B'1 sont chacune sensiblement orientée vers cette seconde piste 56, du fait de leur inclinaison décrite ci-dessus.

Le système 26 comporte en outre un élément d'actionnement 60 de la pièce annulaire 52, agencé entre les première et seconde pistes 50, 56. Cet élément 60 prend la forme d'un ergot solidarisé à l'extrémité radiale extérieure d'un plateau 61 sensiblement annulaire, également d'axe 24. Il est de préférence en liaison pivot avec la seconde piste 56 sur laquelle il est préférentiellement en contact, son plateau 61 étant relié au rotor d'un moteur d'actionnement 40, afin de pourvoir être mis en rotation par ce dernier, selon l'axe 24. A ce titre, il est noté que le moteur 40 dispose d'un stator fixé sur le rotor 18 de l'hélice 1.

L'élément d'actionnement 60 présente une première surface de butée C1 dans le premier sens 55a, ainsi qu'une seconde surface de butée C2 dans le second sens 55b.

En coupe orthogonale à l'axe 24 telle que celle montrée sur la figure 4, la surface C2, de préférence plane, est aussi orientée radialement vers l'intérieur et en direction de la première encoche 54a, son angle avec la direction locale circonférentielle étant de préférence compris entre 5 et 85°. De même, la surface C1, de préférence plane, est aussi orientée radialement vers l'intérieur et en direction de la seconde encoche 54b, son angle avec la direction locale circonférentielle étant aussi de préférence compris entre 5 et 85°.

Dans la position normale montrée sur la figure 4, qui sera explicitée ci-après, les surfaces C1 et C2 sont également agencées dos à dos de façon symétrique par rapport au plan P, correspondant aussi au plan de symétrie de l'ergot 60.

En outre, un premier élément de blocage 64a, de préférence en forme de rouleau, est prévu entre les première et seconde pistes, logé dans la première encoche 54a et en regard de la seconde surface de butée C2 de l'élément 60. De la même manière, un second élément de blocage 64b, de préférence en forme de rouleau, est prévu entre les première et seconde pistes, logé dans la seconde encoche 54b et en regard de la première surface de butée C1 de l'élément 60.

La figure 4 représente le système de commande 26 avec les éléments de blocage 64a, 64b occupant, durant le fonctionnement du turbomoteur, une position normale d'arc-boutement.

Dans cette position, le premier élément de blocage 64a est d'une part en contact avec la seconde surface de butée B2, à distance de la première surface de butée B1 et du fond d'encoche, et d'autre part en contact avec la seconde piste 56. Cette position est en particulier assurée par un premier ressort 59a, placé entre la première surface de butée B1 et le rouleau 64a. Ce ressort 59a exerce alors une action r1 sur le rouleau 64a qui tend à déplacer ce dernier dans le second sens 55b, jusqu'à le mettre en contact avec la surface de butée B2. Le rouleau 64a étant donc stoppé en rotation dans ce second sens 55b par la seconde surface de butée B2, celle-ci exerce alors un premier effort de contact F1 sur le rouleau 64a.

Cet effort F1 génère un premier effort de réaction R1 de la seconde piste 56 sur le rouleau 64a. Ainsi, le premier effort de contact F1 et le premier effort de réaction R1 assurent conjointement un premier arc-boutement des première et seconde pistes, rendant celles-ci solidaires en rotation dans le premier sens 55a. A cet égard, durant le fonctionnement du turbomoteur provoquant la rotation de l'hélice, une force aérodynamique s'exerce sur les pales, et engendre un couple de sens donné sur la pièce 52, en raison de son raccordement mécanique aux pales. Si le sens donné correspond au premier sens 55a, la pièce 52 restera avantageusement immobile en rotation vis-à-vis de l'anneau de rétention 19, selon l'axe 24, puisque le couple appliqué à cette pièce annulaire 52 ne fera que renforcer l'arc-boutement procuré par le rouleau 64a, par augmentation de l'intensité des efforts F1 et R1.

Toujours dans la position normale d'arc-boutement, le second élément de blocage 64b est d'une part en contact avec la première surface de butée B'1, à distance de la seconde surface de butée B'2 et du fond d'encoche, et d'autre part en contact avec la seconde piste 56. Cette position est en particulier assurée par un second ressort 59b, placé entre la seconde surface de butée B'2 et le rouleau 64b. Ce ressort 59b exerce alors une action r2 sur le rouleau 64b qui tend à déplacer ce dernier dans le premier sens 55a. Le rouleau 64b étant stoppé en rotation dans ce premier sens 55a par la première surface de butée B'1, celle-ci exerce alors un second effort de contact F2 sur le rouleau 64b.

Cet effort F2 génère un second effort de réaction R2 de la seconde piste 56 sur le rouleau 64b. Ainsi, le second effort de contact F2 et le second effort de réaction R2 assurent conjointement un second arc-boutement des première et seconde pistes, rendant celles-ci solidaires en rotation dans le second sens 55b. A cet égard, durant le fonctionnement du turbomoteur provoquant la rotation de l'hélice, si le sens donné du couple appliqué à la pièce 52, résultant de la force aérodynamique s'exerçant sur les pales, correspond au second sens 55b, alors la pièce 52 restera avantageusement immobile en rotation vis-à-vis de l'anneau de rétention 19, selon l'axe 24, puisque le couple appliqué à cette pièce annulaire 52 ne fera que renforcer l'arc-boutement procuré par le rouleau 64b, par augmentation de l'intensité des efforts F2 et R2.

Cette position normale d'arc-boutement des éléments de blocage 64a, 64b est conservée tant que le moteur 40 n'est pas actionné, et interdit toute modification d'incidence de la pale.

Pour faire varier l'incidence de la pale, le système 26 doit être piloté afin d'amener les rouleaux 64a, 64b dans une autre position, dite de déblocage dans l'un ou l'autre des deux sens 55a, 55b.

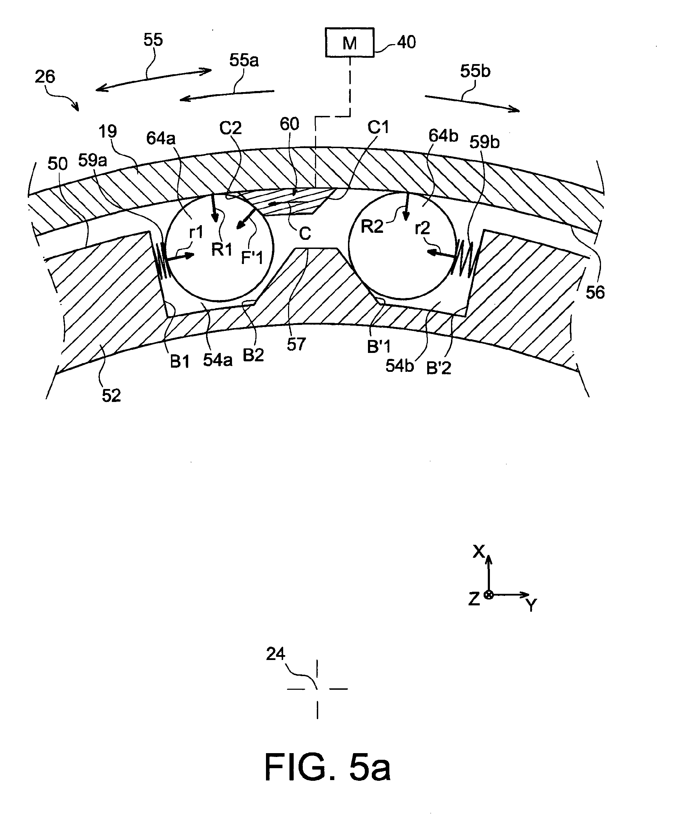

La figure 5a se rapporte au cas où la pale doit être modifiée en incidence vers sa position d'incidence minimale.

Dans cette configuration de déblocage dans le premier sens, le rouleau 64a est amené au contact de la seconde surface de butée C2. Cette position est assurée par l'application d'un premier couple d'actionnement C dans le premier sens 55a, sur l'élément d'actionnement 60, et plus précisément sur le plateau 61 via le moteur 40, entraînant l'ergot 60 à venir au contact du rouleau 64a. Ce couple C est de valeur permettant d'exercer, sur le premier rouleau 64a, avec la seconde surface de butée C2, un premier effort de déblocage F'1 s'opposant à la force r1 du premier ressort, visant à mettre ce dernier en compression de manière à préférentiellement amener le rouleau 64a au contact de la surface B1. De manière générale, l'effort de déblocage F'1 est suffisant pour rendre nul le premier effort d'appui F1. Il y a donc perte de contact entre le rouleau 64a et la surface de butée B2, de sorte que le premier arc-boutement est rompu. Eventuellement, en raison de l'inclinaison de la surface de butée C2 vers la première piste 50, le contact entre la seconde piste 56 et le rouleau 64a peut également être rompu, du fait de la tendance de ce rouleau 64a à être soulevé par la surface de butée C2.

Ceci rend l'effort de réaction R1 nul, et assure un pincement de ce rouleau 64a entre le ressort 59a se comprimant, et la surface C2. A cet égard, comme évoqué ci-dessus, la compression du ressort peut être telle que le rouleau entre au contact de la surface de butée B1. Dans le cas où le contact entre la seconde piste 56 et le rouleau 64a n'est pas rompu, il est de préférence fait en sorte que l'effort de réaction R1 soit extrêmement faible, autorisant un roulement et/ou glissement entre les deux éléments.

Cette position rend possible la mise en rotation de la pièce 52 par rapport à la seconde piste 56 de l'anneau de rétention 19, selon l'axe 24, dans le premier sens 55a. C'est en effet l'ensemble comportant la première piste 50, les premier et second éléments de blocage 64a, 64b et l'élément d'actionnement 60 qui sont simultanément déplacés en rotation, sous l'effet de cet élément 60 animé du couple C, par appui du rouleau 64a sur la surface de butée B1, éventuellement via le ressort 59a. En outre, il est noté que ce principe s'applique quel que soit le sens du couple appliqué à la pièce annulaire 52, résultant de la force aérodynamique s'exerçant sur la pale.

Par ailleurs, il est noté que le second arc-boutement ne crée pas d'obstacle à la rotation du pivot 52 dans le premier sens 55a, au moins en raison du fait que cette rotation tend à supprimer le contact entre le second rouleau 64b et la surface de butée B'1, rendant nul l'effort F2 et conduisant donc à rompre ce second arc-boutement. Le rouleau 64b est alors en mesure d'accompagner la rotation du pivot 52, en rouleau et/ou glissant sur la seconde piste 56 tout en restant dans sa seconde encoche.

Ainsi, le couple d'actionnement C permet simultanément de débloquer le système 26, et de provoquer la rotation du pivot 52 par rapport à la seconde piste 56 de l'anneau de rétention 19 du rotor. Cela engendre une variation du calage de la pale 6, de sa position d'incidence maximale vers sa position d'incidence minimale.

Une fois le moteur 40 arrêté, le système de commande 26 est automatiquement ramené dans sa configuration assurant la position normale de blocage des rouleaux 64a, 64b, par l'intermédiaire de moyens élastiques de rappel couplés à l'élément d'actionnement 60, tel qu'un ressort (non représenté). Ce ressort permet en effet de déplacer en rotation cet élément d'actionnement 60 relativement à la première piste 50, de manière à rompre le contact entre le rouleau 64a et la surface C2. Simultanément, le ressort 59a vient repousser le rouleau 64a sur la surface de butée B2, assurant à nouveau le premier arc-boutement. De la même manière, le ressort 59b vient repousser le rouleau 64b sur la surface de butée B'1, assurant à nouveau le second arc-boutement.

Ainsi, lors de l'arrêt du moteur 40, le pivot 52 conserve sa position angulaire relativement à la seconde piste, ce qui assure une forte précision de calage de la pale.

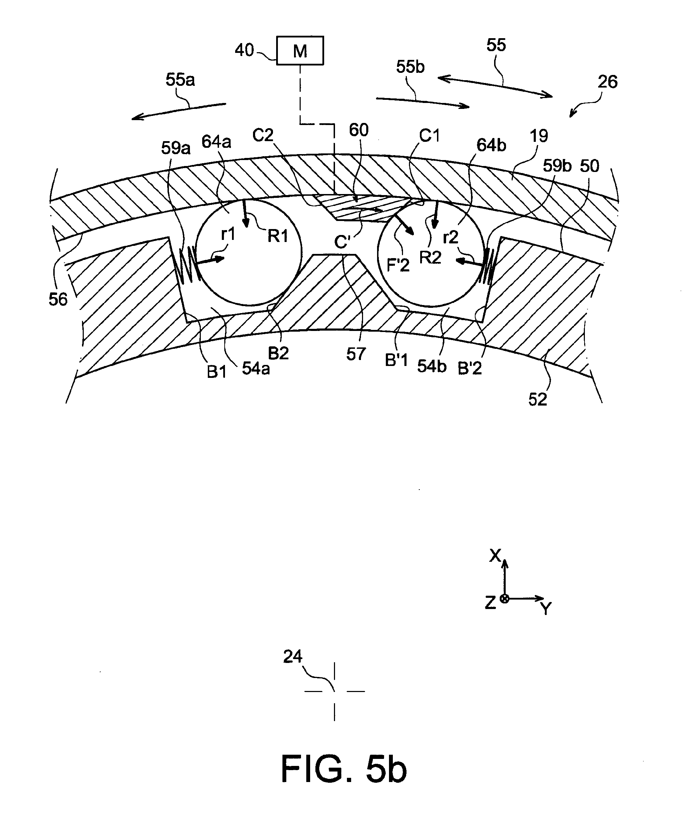

La figure 5b se rapporte au cas où la pale doit être modifiée en incidence vers sa position d'incidence maximale.

Dans cette configuration de déblocage dans le second sens 55b, le rouleau 64b est amené au contact de la première surface de butée C1. Cette position est assurée par l'application d'un second couple d'actionnement C' dans le second sens 55b, sur l'élément d'actionnement 60, et plus précisément sur le plateau 61 via le moteur 40, entraînant l'ergot 60 à venir au contact du rouleau 64b. Ce couple C' est de valeur permettant d'exercer, sur le second rouleau 64b, avec la première surface de butée C1, un second effort de déblocage F'2 s'opposant à la force r2 du second ressort, visant à mettre ce dernier en compression de manière à préférentiellement amener le rouleau 64b au contact de la surface B'2. De manière générale, l'effort de déblocage F'2 est suffisant pour rendre nul le second effort d'appui F2. Il y a donc perte de contact entre le rouleau 64b et la surface de butée B'1, de sorte que le second arc-boutement est rompu.

Eventuellement, en raison de l'inclinaison de la surface de butée C1 vers la première piste 50, le contact entre la seconde piste 56 et le rouleau 64b peut également être rompu, du fait de la tendance de ce rouleau 64b à être soulevé par la surface de butée C1.

Ceci rend l'effort de réaction R2 nul, et assure un pincement de ce rouleau 64b entre le ressort 59b se comprimant, et la surface C1. A cet égard, comme évoqué ci-dessus, la compression du ressort peut être telle que le rouleau 64b entre au contact de la surface de butée B'2. Dans le cas où le contact entre la seconde piste 56 et le rouleau 64b n'est pas rompu, il est de préférence fait en sorte que l'effort de réaction R2 soit extrêmement faible, autorisant un roulement et/ou glissement entre les deux éléments.

Cette position rend possible la mise en rotation de la pièce 52 par rapport à la seconde piste 56 de l'anneau de rétention 19, selon l'axe 24, dans le second sens 55b. C'est en effet l'ensemble comportant la première piste 50, les premier et second éléments de blocage 64a, 64b et l'élément d'actionnement 60 qui sont simultanément déplacés en rotation, sous l'effet de cet élément 60 animé du couple C', par appui du rouleau 64b sur la surface de butée B'2, éventuellement via le ressort 59b. Ici encore, il est noté que ce principe s'applique quel que soit le sens du couple appliqué à la pièce annulaire 52, résultant de la force aérodynamique s'exerçant sur la pale.

Par ailleurs, il est noté que le premier arc-boutement ne crée pas d'obstacle à la rotation du pivot 52 dans le second sens 55b, au moins en raison du fait que cette rotation tend à supprimer le contact entre le premier rouleau 64a et la surface de butée B2, rendant nul l'effort F1 et conduisant donc à rompre ce premier arc-boutement. Le rouleau 64a est alors en mesure d'accompagner la rotation du pivot 52, en rouleau et/ou glissant sur la seconde piste 56 tout en restant dans sa première encoche.

Ainsi, le couple d'actionnement C' permet simultanément de débloquer le système 26, et de provoquer la rotation du pivot 52 par rapport à la seconde piste 56 de l'anneau de rétention 19 du rotor. Cela engendre une variation du calage de la pale 6, de sa position d'incidence minimale vers sa position d'incidence maximale.

Une fois le moteur 40 arrêté, le système de commande 26 est automatiquement ramené dans sa configuration assurant la position normale de blocage des rouleaux 64a, 64b, par l'intermédiaire des moyens élastiques de rappel couplés à l'élément d'actionnement 60, ainsi que par l'intermédiaire des ressorts 59a, 59b, tel que cela a été décrit ci-dessus.

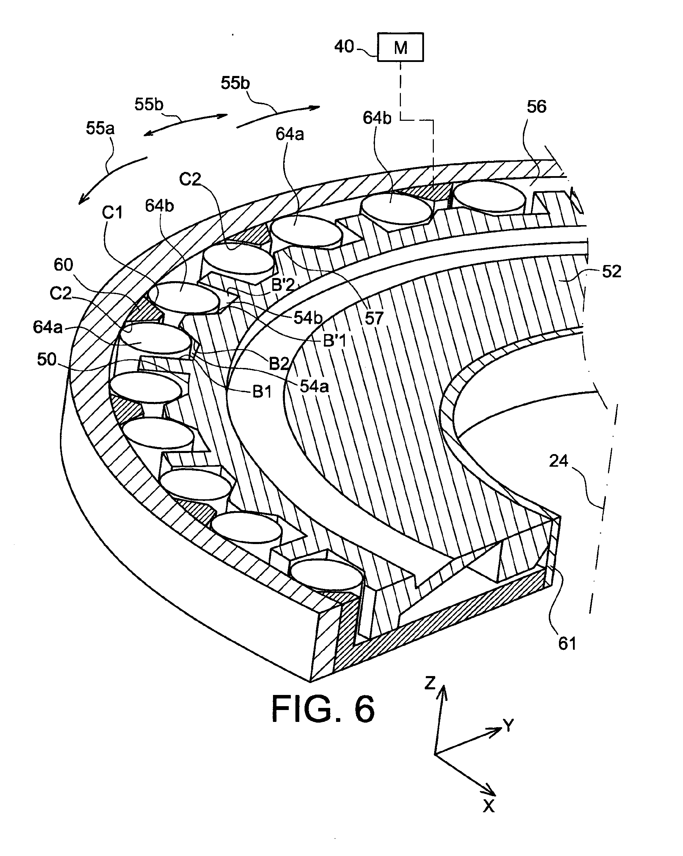

Selon un autre mode de réalisation préféré de la présente invention, il est prévu plusieurs doublets d'éléments de blocage 64a, 64b, espacés circonférentiellement les uns des autres autour de l'axe 24, comme montré sur la figure 6. De préférence, ces éléments 64a, 64b sont agencés en alternance, avec pour chaque doublet, un élément d'actionnement 60 agencé entre les deux éléments 64a, 64b, comme décrit pour le mode de réalisation préféré précédent. De plus, ces éléments 60, chacun en forme d'ergot, sont solidaires du plateau 61 entraîné par le moteur d'actionnement (non représenté sur la figure 6). Cette configuration permet globalement de répartir de façon plus homogène, dans la direction circonférentielle, les efforts assurant les arc-boutement des première et seconde pistes.

En outre, il est noté que si les éléments de blocage 64a, 64b sont de préférence des rouleaux, et les surfaces de butée C1, C2 avec lesquelles ils coopèrent, des surfaces sensiblement planes, une alternative de réalisation peut consister à prévoir que les éléments de blocage 64a, 64b sont des billes, et les surfaces C1, C2 des surfaces sensiblement sphériques.

Bien entendu, diverses modifications peuvent être apportées par l'homme du métier à l'invention qui vient d'être décrite, uniquement à titre d'exemples non limitatifs.

## Revendications

1. Système (26) de commande de calage d'une pale d'hélice (6) d'un turbomoteur pour aéronef, comprenant:
- une pièce annulaire (52) de logement de pied de ladite pale, dont la rotation est destinée à assurer le calage en incidence de cette pale, ladite pièce annulaire définissant une première piste (50) présentant au moins une première et une seconde encoches (54a, 54b) espacées circonférentiellement l'une de l'autre et chacune délimitée par une première surface de butée (B1, B'1) dans un premier sens (55a) de la direction circonférentielle (55) et par une seconde surface de butée (B2, B'2) dans un second sens de la direction circonférentielle, opposé audit premier sens ;
- une seconde piste (56) sensiblement annulaire, concentrique à ladite première piste et disposée en regard et extérieurement par rapport à celle-ci, ladite seconde surface de butée (B2) de la première encoche et ladite première surface de butée (B'1) de la seconde encoche étant également chacune orientée vers ladite seconde piste ;
- un élément d'actionnement (60) de la pièce annulaire (52) agencé entre les première et seconde pistes (50, 56), ledit élément d'actionnement présentant une première surface de butée (C1) dans le premier sens de la direction circonférentielle ainsi qu'une seconde surface de butée (C2) dans le second sens de la direction circonférentielle ; **caractérisé en ce qu'**il comprend
- un premier élément de blocage (64a) prévu entre les première et seconde pistes, logé dans ladite première encoche (54a) et en regard de ladite seconde surface de butée de l'élément d'actionnement (60) ; et
- un second élément de blocage (64b) prévu entre les première et seconde pistes, logé dans ladite seconde encoche (54b) et en regard de ladite première surface de butée de l'élément d'actionnement (60) ;
lesdits premier et second éléments de blocage (64a, 64b) étant aptes à occuper, durant le fonctionnement du turbomoteur :
- une position normale d'arc-boutement, dans laquelle ledit premier élément de blocage (64a) est d'une part en contact avec la seconde surface de butée (B2) de la première encoche, à distance de ladite première surface de butée (B1) de cette encoche et de la seconde surface de butée (C2) de l'élément d'actionnement, et d'autre part en contact avec la seconde piste, position dans laquelle un premier ressort (59a) placé entre ladite première surface de butée (B1) de l'encoche et ledit premier élément de blocage (64a) provoque un premier effort de contact (F1) de ladite seconde surface de butée (B2) de l'encoche sur le premier élément de blocage (64a), et générant un premier effort de réaction (R1) de ladite seconde piste (56) sur ledit premier élément de blocage (64a), le premier effort de contact (F1) et le premier effort de réaction (R1) assurant un premier arc-boutement des première et seconde pistes, rendant celles-ci solidaires en rotation dans ledit premier sens,
et dans laquelle ledit second élément de blocage (64b) est d'une part en contact avec la première surface de butée (B'1) de la seconde encoche, à distance de ladite seconde surface de butée (B'2) de cette encoche et de la première surface de butée (C1) de l'élément d'actionnement, et d'autre part en contact avec la seconde piste, position dans laquelle un second ressort (59b) placé entre ladite seconde surface de butée (B'2) de l'encoche et ledit second élément de blocage (64b) provoque un second effort de contact (F2) de ladite première surface de butée de l'encoche sur l'élément de blocage (64b), et générant un second effort de réaction (R2) de ladite seconde piste (56) sur ledit second élément de blocage (64), le second effort de contact (F2) et le second effort de réaction (R2) assurant un second arc-boutement des première et seconde pistes, rendant celles-ci solidaires en rotation dans ledit second sens ;
- une position de déblocage dans ledit premier sens (55a), dans laquelle le premier élément de blocage (64a) est au contact de la seconde surface de butée (C2) de l'élément d'actionnement (60), cette position de déblocage étant assurée par l'application d'un premier couple d'actionnement (C) dans ledit premier sens sur ledit élément d'actionnement (60), de valeur permettant d'exercer, sur le premier élément de blocage (64a) avec ladite seconde surface de butée (C2) de l'élément d'actionnement, un premier effort de déblocage (F'1) s'opposant à la force du premier ressort, et suffisant pour rendre nul ledit premier effort d'appui (F1), et rompre ainsi ledit premier arc-boutement, ladite position de déblocage dans ledit premier sens autorisant le déplacement en rotation, par rapport à la seconde piste, dans ledit premier sens du couple d'actionnement (C), de l'ensemble comportant ladite première piste (50), lesdits premier et second éléments de blocage (64a, 64b) et ledit élément d'actionnement (60) ; et
- une position de déblocage dans ledit second sens (55b), dans laquelle le second élément de blocage (64b) est au contact de la première surface de butée (C1) de l'élément d'actionnement (60), cette position de déblocage étant assurée par l'application d'un second couple d'actionnement (C') dans ledit second sens sur ledit élément d'actionnement (60), de valeur permettant d'exercer, sur le second élément de blocage (64b) avec ladite première surface de butée de l'élément d'actionnement, un second effort de déblocage (F'2) s'opposant à la force du second ressort, et suffisant pour rendre nul ledit second effort d'appui (F2), et rompre ainsi ledit second arc-boutement, ladite position de déblocage dans ledit second sens autorisant le déplacement en rotation, par rapport à la seconde piste, dans ledit second sens du couple d'actionnement (C'), de l'ensemble comportant ladite première piste (50), lesdits premier et second éléments de blocage (64a, 64b) et ledit élément d'actionnement (60).

2. Système de commande selon la revendication 1, **caractérisé en ce que** lesdites première et seconde surfaces de butée (C1, C2) de l'élément d'actionnement (60) sont également chacune orientée vers ladite première piste (50).

3. Système de commande selon la revendication 1 ou la revendication 2, **caractérisé en ce qu'**il comprend des moyens élastiques de rappel couplés audit élément d'actionnement, et permettant, lorsque ce dernier n'est pas soumis audit premier couple d'actionnement (C) ou audit second couple d'actionnement (C'), de déplacer en rotation cet élément d'actionnement (60) relativement à ladite première piste (50), de manière à ramener lesdits premier et second éléments de blocage (64a, 64b) en position normale d'arc-boutement.

4. Système de commande selon l'une quelconque des revendications précédentes, **caractérisé en ce qu'**il comprend un moteur d'actionnement (40) commandant en rotation ledit élément d'actionnement (60).

5. Système de commande selon l'une quelconque des revendications précédentes, **caractérisé en ce que** lesdits premier et second éléments de blocage (64a, 64b) sont des rouleaux.

6. Système de commande selon l'une quelconque des revendications 1 à 4, **caractérisé en ce que** lesdits premier et second éléments de blocage (64a, 64b) sont des billes.

7. Système de commande selon l'une quelconque des revendications précédentes, **caractérisé en ce que** lesdits premier et second éléments de blocage (64a, 64b) forment un doublet d'éléments de blocage, et **en ce que** le système est équipé d'une pluralité de doublets d'éléments de blocage espacés circonférentiellement les uns des autres.

8. Hélice (1) pour turbomoteur d'aéronef comprenant un système (26) de commande de calage selon l'une quelconque des revendications précédentes, associé à chacune de ses pales (6).

9. Turbomachine pour aéronef comprenant au moins une hélice (1) selon la revendication 8.

10. Procédé de pilotage d'un système de commande de calage d'une pale d'hélice d'un turbomoteur selon l'une quelconque des revendications 1 à 7, **caractérisé en ce que** lorsqu'un calage en incidence est requis, il est appliqué un couple d'actionnement approprié (C, C') audit élément d'actionnement.

## Patentansprüche

1. System (26) zur Steuerung der Einstellung eines Luftschraubenblattes (6) eines Triebwerks für ein Luftfahrzeug, umfassend
- ein ringförmiges Teil (52) zur Aufnahme des Fußes des Blattes, dessen Rotation dazu bestimmt ist, die Anstellwinkeleinstellung dieses Blattes sicherzustellen, wobei das ringförmige Teil eine erste Spur (50) definiert, die wenigstens eine erste und eine zweite Auskerbung (54a, 54b) aufweist, welche in Umfangsrichtung voneinander beabstandet sind und jeweils durch eine erste Anschlagfläche (B1, B'1) in einem ersten Sinn (55a) der Umfangsrichtung (55) und durch eine zweite Anschlagfläche (B2, B'2) in einem zu dem ersten Sinn entgegengesetzten zweiten Sinn der Umfangsrichtung begrenzt sind;
- eine im Wesentlichen ringförmige zweite Spur (56), die zu der ersten Spur konzentrisch ist und in Bezug auf diese gegenüberliegend und außerhalb angeordnet ist, wobei die zweite Anschlagfläche (B2) der ersten Auskerbung und die erste Anschlagfläche (B'1) der zweiten Auskerbung ebenfalls jeweils in Richtung der zweiten Spur ausgerichtet sind;
- ein Element zum Betätigen (60) des ringförmigen Teils (52), das zwischen der ersten und der zweiten Spur (50, 56) angeordnet ist, wobei das Betätigungselement eine erste Anschlagfläche (C1) in dem ersten Sinn der Umfangsrichtung sowie eine zweite Anschlagfläche (C2) in dem zweiten Sinn der Umfangsrichtung aufweist,
**dadurch gekennzeichnet, dass** es umfasst:
- ein erstes Blockierelement (64a), das zwischen der ersten und der zweiten Spur vorgesehen ist, in der ersten Auskerbung (54a) sowie gegenüber der zweiten Anschlagfläche des Betätigungselements (60) aufgenommen ist; und
- ein zweites Blockierelement (64b), das zwischen der ersten und der zweiten Spur vorgesehen ist, in der zweiten Auskerbung (54b) sowie gegenüber der ersten Anschlagfläche des Betätigungselements (60) aufgenommen ist;
wobei das erste und das zweite Blockierelement (64a, 64b) geeignet sind, während des Betriebs des Triebwerks einzunehmen:
- eine normale Abstützposition, in der das erste Blockierelement (64a) einerseits im Abstand von der ersten Anschlagfläche (B1) dieser Auskerbung und von der zweiten Anschlagfläche (C2) des Betätigungselements mit der zweiten Anschlagfläche (B2) der ersten Auskerbung in Kontakt ist, und andererseits mit der zweiten Spur in Kontakt ist, Position, in der eine erste Feder (59a), die zwischen der ersten Anschlagfläche (B1) der Auskerbung und dem ersten Blockierelement (64a) angeordnet ist, eine erste Kontaktkraft (F1) der zweiten Anschlagfläche (B2) der Auskerbung auf das erste Blockierelement (64a) bewirkt, die eine erste Reaktionskraft (R1) der zweiten Spur (56) auf das erste Blockierelement (64a) erzeugt, wobei die erste Kontaktkraft (F1) und die erste Reaktionskraft (R1) ein erstes Abstützen der ersten und der zweiten Spur gewährleisten, das diese in dem ersten Sinn drehfest verbunden macht,
und in der das zweite Blockierelement (64b) einerseits im Abstand von der zweiten Anschlagfläche (B'2) dieser Auskerbung und von der ersten Anschlagfläche (C1) des Betätigungselements mit der ersten Anschlagfläche (B'1) der zweiten Auskerbung in Kontakt ist, und andererseits mit der zweiten Spur in Kontakt ist, Position, in der eine zweite Feder (59b), die zwischen der zweiten Anschlagfläche (B'2) der Auskerbung und dem zweiten Blockierelement (64b) angeordnet ist, eine zweite Kontaktkraft (F2) der ersten Anschlagfläche der Auskerbung auf das Blockierelement (64b) bewirkt, die eine zweite Reaktionskraft (R2) der zweiten Spur (56) auf das zweite Blockierelement (64) erzeugt, wobei die zweite Kontaktkraft (F2) und die zweite Reaktionskraft (R2) ein zweites Abstützen der ersten und der zweiten Spur gewährleisten, das diese in dem zweiten Sinn drehfest verbunden macht;
- eine Position zur Freigabe in dem ersten Sinn (55a), in der das erste Blockierelement (64a) mit der zweiten Anschlagfläche (C2) des Betätigungselements (60) in Kontakt ist, wobei diese Freigabeposition durch das Anlegen eines ersten Betätigungsdrehmoments (C) in dem ersten Sinn an das Betätigungselement (60) sichergestellt wird, mit einem Wert, der ermöglicht, auf das erste Blockierelement (64a) mit der zweiten Anschlagfläche (C2) des Betätigungselements eine erste Freigabekraft (F'1) auszuüben, die der Kraft der ersten Feder entgegenwirkt und die ausreicht, um die erste Anlagekraft (F1) null zu machen und somit das erste Abstützen zu unterbrechen, wobei die Position zur Freigabe in dem ersten Sinn die Drehbewegung der die erste Spur (50), das erste und das zweite Blockierelement (64a, 64b) und das Betätigungselement (60) umfassenden Anordnung gegenüber der zweiten Spur in dem ersten Sinn des Betätigungsdrehmoments (C) zulässt; und
- eine Position zur Freigabe in dem zweiten Sinn (55b), in der das zweite Blockierelement (64b) mit der ersten Anschlagfläche (C1) des Betätigungselements (60) in Kontakt ist, wobei diese Freigabeposition durch das Anlegen eines zweiten Betätigungsdrehmoments (C') in dem zweiten Sinn an das Betätigungselement (60) sichergestellt wird, mit einem Wert, der ermöglicht, auf das zweite Blockierelement (64b) mit der ersten Anschlagfläche des Betätigungselements eine zweite Freigabekraft (F'2) auszuüben, die der Kraft der zweiten Feder entgegenwirkt und die ausreicht, um die zweite Anlagekraft (F2) null zu machen und somit das zweite Abstützen zu unterbrechen, wobei die Position zur Freigabe in dem zweiten Sinn die Drehbewegung der die erste Spur (50), das erste und das zweite Blockierelement (64a, 64b) und das Betätigungselement (60) umfassenden Anordnung gegenüber der zweiten Spur in dem zweiten Sinn des Betätigungsdrehmoments (C') zulässt.

2. Steuerungssystem nach Anspruch 1, **dadurch gekennzeichnet, dass** die erste und die zweite Anschlagsfläche (C1, C2) des Betätigungselements (60) ebenfalls jeweils in Richtung der ersten Spur (50) ausgerichtet sind.

3. Steuerungssystem nach Anspruch 1 oder Anspruch 2, **dadurch gekennzeichnet, dass** es elastische Rückstellmittel umfasst, die mit dem Betätigungselement gekoppelt sind und die, wenn letzteres nicht dem ersten Betätigungsdrehmament (C) oder dem zweiten Betätigungsdrehmoment (C') ausgesetzt ist, ermöglichen, dieses Betätigungselement (60) relativ zu der ersten Spur (50) drehend zu bewegen, um das erste und das zweite Blockierelement (64a, 64b) in die normale Abstützposition zurückzuführen.

4. Steuerungssystem nach einem der vorhergehenden Ansprüche, **dadurch gekennzeichnet, dass** es einen Betätigungsmotor (40) umfasst, der das Betätigungselement (60) drehbetätigt.

5. Steuerungssystem nach einem der vorhergehenden Ansprüche, **dadurch gekennzeichnet, dass** das erste und das zweite Blockierelement (64a, 64b) Rollen sind.

6. Steuerungssystem nach einem der Ansprüche 1 bis 4, **dadurch gekennzeichnet, dass** das erste und das zweite Blockierelement (64a, 64b) Kugeln sind.

7. Steuerungssystem nach einem der vorhergehenden Ansprüche, **dadurch gekennzeichnet, dass** das erste und das zweite Blockierelement (64a, 64b) ein Blockierelemente-Paar bilden und dass das System mit einer Vielzahl von Blockierelemente-Paaren, die in Umfangsrichtung voneinander beabstandet sind, ausgestattet ist.

8. Luftschraube (1) für ein Triebwerk eines Luftfahrzeugs, umfassend ein System (26) zur Steuerung der Einstellung nach einem der vorhergehenden Ansprüche, das einem jeden ihrer Blätter (6) zugeordnet ist.

9. Turbomaschine für ein Luftfahrzeug, umfassend wenigstens eine Luftschraube (1) nach Anspruch 8.

10. Verfahren zur Steuerung eines Systems zum Steuern der Einstellung eines Luftschraubenblattes eines Triebwerks nach einem der Ansprüche 1 bis 7, **dadurch gekennzeichnet, dass** wenn eine Anstellwinkeleinstellung erforderlich ist, ein geeignetes Betätigungsdrehmoment (C, C') an das Betätigungselement angelegt wird.

## Claims

1. A simplified system (26) for controlling propeller blade (6) pitch in an aircraft turboshaft engine, comprising:
- an annular part (52) for housing the root of said blade, the rotation of which is intended to ensure setting of the incidence of said blade, said annular part defining a first track (50) having at least first and second notches (54a, 54b) circumferentially spaced apart from each other and each delimited by a first stop surface (B1, B'1) in a first direction (55a) of the circumferential direction (55) and by a second stop surface (B2, B'2) in a second direction of the circumferential direction, opposite said first direction;
- a second substantially annular track (56), concentric to said first track and positioned opposite and outside in relation thereto, said second stop surface (B2) of the first notch and said first stop surface (B'1) of the second notch also each being oriented towards said second track;
- a member (60) for actuating the annular part (52) arranged between the first and second tracks (50, 56), said actuating member having a first stop surface (C1) in the first direction of the circumferential direction as well as a second stop surface (C2) in the second direction of the circumferential direction;
**characterized in that** it comprises :
- a first locking member (64a) provided between the first and second tracks, housed in said first notch (54a) and opposite said second stop surface of the actuating member (60); and
- a second locking member (64b) provided between the first and second tracks, housed in said second notch (54b) and opposite said first stop surface of the actuating member (60);
said first and second locking members (64a, 64b) being able to occupy, during the operation of the turboshaft engine:
- a normal over-center position, in which said first locking member (64a) is on one hand in contact with the second stop surface (B2) of the first notch, at a distance from said first stop surface (B1) of said notch and from the second stop surface (C2) of the actuating member, and on the other hand in contact with the second track, position in which a first spring (59a) placed between said first stop surface (B1) of the notch and said first locking member (64a) causes a first contact stress (F1) of said second stop surface (B2) of the notch on the first locking member (64a), and creating a first reaction stress (R1) of said second track (56) on said first locking member (64a), the first contact stress (F1) and the first reaction stress (R1) ensuring a first over-center of the first and second tracks, making them integral in rotation in the first direction,
and in which said second locking member (64b) is on one hand in contact with the first stop surface (B'1) of the second notch, at a distance from said second stop surface (B'2) of said notch and from the first stop surface (C1) of the actuating member, and on the other hand in contact with the second track, position in which a second spring (59b) placed between said second stop surface (B'2) of the notch and said second locking member (64b) causes a second contact stress (F2) of said first stop surface of the notch on the locking member (64b), and creating a second reaction stress (R2) of said second track (56) on said second locking member (64), the second contact stress (F2) and the second reaction stress (R2) ensuring a second over-center of the first and second tracks, making them integral in rotation in said second direction; and
- an unlocking position in said first direction (55a), in which the first locking member (64a) is in contact with the second stop surface (C2) of the actuating member (60), this unlocking position being ensured by the application of a first actuating torque (C) in said first direction on said actuating member (60), of a value making it possible to exert, on the first locking member (64a) with said second stop surface (C2) of the actuating member, a first unlocking stress (F'1) opposing the force of the first spring, and sufficing to make said first bearing stress (F1) null, and thereby to break said first over-center, said unlocking position in the first direction allowing the rotational movement, in relation to the second track, in said first direction of the actuating torque (C), of the assembly including said first track (50), said first and second locking members (64a, 64b) and said actuating member (60); and
- an unlocking position in said second direction (55b), in which the second locking member (64b) is in contact with the first stop surface (C1) of the actuating member (60), this unlocking position being ensured by the application of a second actuating torque (C') in said second direction on said actuating member (60), of a value making it possible to exert, on the second locking member (64b) with said first stop surface of the actuating member, a second unlocking stress (F'2) opposing the force of the second spring, and sufficing to make said second bearing stress (F2) null, and thereby to break said second over-center, said unlocking position in said second direction allowing the rotational movement, in relation to the second track, in said second direction of the actuating torque (C'), of the assembly including said first track (50), said first and second locking members (64a, 64b) and said actuating member (60).

2. The control system according to claim 1, **characterized in that** said first and second stop surfaces (C1, C2) of the actuating member (60) are also each oriented towards said first track (50).

3. The control system according to claim 1 or claim 2, **characterized in that** it comprises elastic return means coupled to said actuating member, and making it possible, when the latter is not subjected to said first actuating torque (C) or said second actuating torque (C'), to move said actuating member (60) in rotation relative to said first track (50), so as to automatically bring said first and second locking members (64a, 64b) back into the normal over-center position.

4. The control system according to any one of the preceding claims, **characterized in that** it comprises an actuating engine (40) controlling the rotation of said actuating member (60).

5. The control system according to any one of the preceding claims, **characterized in that** said first and second locking members (64a, 64b) are rollers.

6. The control system according to any one of claims 1 to 4, **characterized in that** said first and second locking members (64a, 64b) are balls.

7. The control system according to any one of the preceding claims, **characterized in that** said first and second locking members (64a, 64b) form a pair of locking members, and the system is equipped with a plurality of pairs of locking members circumferentially spaced apart from each other.

8. A propeller (1) for an aircraft turboshaft engine comprising a pitch control system (26) according to any one of the preceding claims, connected to each of its blades (6).

9. An aircraft turbomachine comprising at least one propeller (1) according to claim 8.

10. A method for steering a system for controlling the pitch of a turboshank engine propeller blade according to any one of claims 1 to 7, **characterized in that** when it is necessary to set the incidence, a suitable actuating torque (C, C') is applied to said actuating member.
